# EUROPEAN PATENT APPLICATION

(11) **EP 1 727 080 A1**
(43) Date of publication of application: **29.11.2006**
(21) Application number: 05011423.0
(22) Date of filing: 27.05.2005
(51) Int. Cl.: G06K 19/077

(54) **SIM with double sets of contacts protected against short-circuit**

(71) Applicant: Axalto S.A., 92120 Montrouge (FR)
(72) Inventor: Barbe, Serge, 92120 Montrouge (FR); Rhelimi, Alain, 92120 Montrouge (FR)
(74) Representative: Cassagne, Philippe M.J.

(57) **Abstract**

The present invention relates to a subscriber identity module (1) comprising a card in which is embedded at least one integrated circuit, on a surface of which said card is provided:
- a first set of contacts (11) providing a first electrical interface; and
- a second set of contacts (10) providing a second electrical interface.

According to the invention:
- said first set of contacts (11) is flush to the surface of the card; and
- said second set of contacts (10) is slightly set back from the surface of the card.

## Description

### FIELD OF THE INVENTION

This invention relates generally to the use and structure of portable object with double pin-outs.

### BACKGROUND OF THE INVENTION

### SIM cards

In particular the present invention concerns a new Subscriber Identity Module (SIM), or SIM Card, with mass storage memory. Said memory is typically flash-type memory.

Existing Subscriber Identity Modules (SIM) are known for example from the specifications published by the European Telecommunications Standards Institute (ETSI). A portion of these specifications appear as GSM 11.11, a version being technical specification ETSI TS 100 977 V8.3.0 (2000-08), entitled "Digital Cellular Telecommunications System (Phase 2+); Specification of the Subscriber Identity Module-Mobile Equipment (SIM-ME) Interface," (GSM 11.11 Version 8.3.0 Release 1999). These specifications are hereby incorporated herein by this reference. Two types of SIM cards are specified: an ID-1 SIM and a Plug-in SIM. In practice, a primary component of each SIM card is a SIM integrated circuit chip.

A SIM card has a format and layout according to the ISO/IEC 7810 and 7816 standards of the International Organization for Standardization (ISO) and the International Electrotechnical Commission (IEC). The ISO/IEC 7810 standard is entitled "Identification cards-Physical characteristics," second edition, August 1995. These standards, copies of which are available from the ISO/IEC in Geneva, Switzerland, are expressly incorporated herein by this reference. The ID-1 SIM card is generally the size of a credit card, having dimensions of 85.60 mm. by 53.98 mm., with rounder corners, and a thickness of 0.76 mm. Such a card may have only memory or may also include a microprocessor, the latter often being referred to as a "Smart Card."

The Plug-in SIM is a very small card. The GSM 11.11 specification calls for this card to be a rectangle 25 mm. by 15 mm., with one corner cut off for orientation, and with the same thickness as the ID-1 SIM card. A primary use of the Plug-in SIM card is in mobile telephones and other portable devices. In both types of cards including the SIM, eight electrical contacts (but with as few as five being used) are specified in the ISO/IEC 7816 standard to be arranged on a surface of the card for contact by a host receptacle.

One function of the SIM provides a level of security for the device in which it is used. In a mobile communications device such as a cellular telephone, the device is authenticated by the communications network sending a random number to the device that is processed by a given algorithm, and the result is sent back to the network. The network compares that result with one it calculates itself by use of the same algorithm. If the results match, communication by the device over the network is enabled. A subscriber authentication key is stored in the SIM for use in this and other security algorithms. The SIM can also operate to control and support various operations of the device in which it is removably installed.

### Memory Cards

Other cards, known as "Memory Cards" have also been commercially used as mass storage memory according to a number of well-known standards. For example, a known Memory Card is the so-called MultiMediaCard™ card. The physical and electrical specifications for the MMC are given in "The MultiMediaCard™ System Specification" that is published by the MultiMediaCard™ Association (MMC-A). Version 3.1 of that Specification, dated June 2001, is incorporated herein by this reference. The MultimediaCard™ card is rectangularly shaped with a size similar to that of a postage stamp. The card's dimensions are 32.0 mm. by 24.0 mm. and 1.4 mm. thick, with a row of electrical contacts on a surface of the card along a narrow edge that also contains a cut-off corner. A "modified" version of the MultiMediaCard™ is the Secure Digital (SD) card. The SD Card has the same rectangular size as the MMC card but with an increased thickness (2.1 mm.) in order to accommodate an additional memory chip if required. A primary difference between these two cards is the inclusion in the SD card of security functionalities for stored data. Another difference between them is that the SD Card includes additional data contacts in order to enable faster data transfer between the card and a host.

Memory Cards are used with personal computers, cellular telephones, personal digital assistants, digital cameras, portable audio players and other host electronic devices for the storage of large amounts of data.

As is apparent from the foregoing summary of the existing electronic card standards, there are many differences in their physical characteristics including size and shape, in the number, arrangement and structure of electrical contacts and in the electrical interface with a host system through those contacts when the card is inserted into the host card slot.

With reference to FIG.1, patent application WO04/095365 (hereby incorporated herein by this reference) in the name of SANDISK Corp. describes a card comprising a non-volatile re-writable data memory, a controller connected to control operation of the memory, a plurality of electrical contacts on an outside surface of the card that are connected with the memory controller, and a SIM function connected with the memory controller in a manner to be accessible through outside contacts and to be able to communicate directly with the memory controller.
A shown in Figure 1, in WO04/095365, the Subscriber Identity Module described comprises two sets 10 and 11 of electrical contacts on an outside surface that follow two different existing card standards.
The set 10 of contacts are provided in a row on the side of the card that has a cut off corner, following typically either the MMC or SD card specifications referenced above. The MMC standard calls for seven contacts. The SD standard uses those same seven contacts plus additional contacts S8 and S9. While the MMC specifications call for a single contact through which data is passed to and from a non-volatile memory within the card, the SD specifications use four data contacts for faster data transmission, as described above. The contacts 10 are typically connected with a memory controller and flash EEPROM memory within the card 1 according to either the MMC or SD standards. The controller and memory may be implemented on separate integrated circuit chips or combined on the same chip.
The set 11 of contacts, in this specific example, follow the ISO/IEC 7816 standard discussed above. The set 11 of contacts may be placed on the same side of the card 1 as the set 10 of contacts, or on the opposite side. The ISO/IEC 7816 standard contemplates the use of eight contacts, and contacts C4 and C8 may be used for USB connections as described in patent EP-B-1110173 assigned to the present applicant. This set 11 of contacts is connected with a SIM function within the card, according for example to the GSM 11. 11 specification, which SIM function may be a separate integrated circuit chip that is commercially available. Of course, the SIM function may alternatively be combined on a single integrated circuit chip with either or both of the controller and memory. For example the card 11 has the physical size of the plug-in SIM.

The solution described in this patent application raises a major problem. In fact as a result of a lot of existing designs of the present mobile phones available for sales, metal parts are often used in some parts of the case which is provided for receiving the SIM card, which metal parts can create short circuit as a result of connection(s) with the set 10 of contacts which adds with respect to the conventional set 11 of contacts used in SIM card. Moreover, a contact with the set 10 might be electrically connected to at least one contact of the set 11, then said contact will connect the metal casing of the mobile phone to this said contact. The impact can be severe when the said contact is the digital ground contact (C5 in the IS07616-2 standard), which will be directly connected to the metal casing and can inject in the digital system EMI and RFI. The metal casing acts like an antenna connected to the digital ground of the handset.

The present invention aims to solve this problem.

Accordingly, a subscriber identity module comprising a card in which is embedded at least one integrated circuit, on a surface of which said card is provided :
a. a first set of contacts providing a first electrical interface; and
b. a second set of contacts providing a second electrical interface; is characterized according to the present invention in that :
c. said first set of contacts is flush to the surface of the card;
d. said second set of contacts is slightly set back from said surface of the card;

Other aspects, features and advantages of the present invention are included in the following description of representative embodiments, which description should be taken in conjunction with the accompanying drawings.

### BRIEF DESCRIPTION OF THE DRAWINGS :

- FIG. 1, already commented, is a front view of a Subscriber Identity Module with two set of contacts ; and
- FIG. 2 is a transversal cross-section view of the card of Figure 1 modified according to the present invention; and
- FIG. 3 is a schematic diagram showing different steps of assembly for the manufacture of a smartcard.

### DESCRIPTION OF PREFERRED EMBODIEMENTS

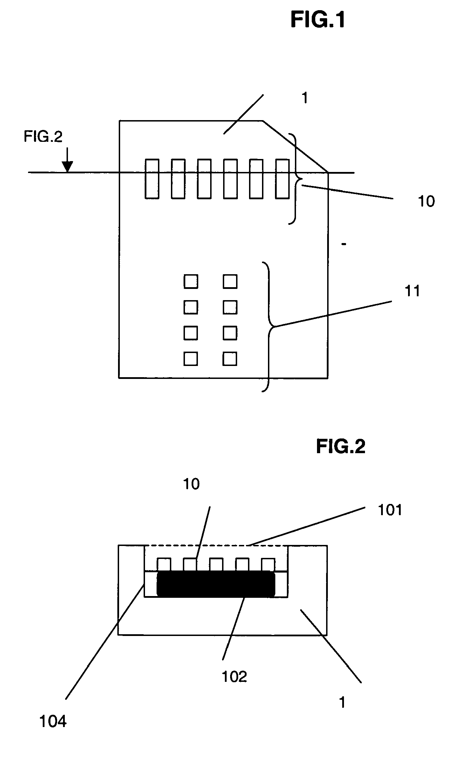

FIG. 1 shows a cross-sectional view of the Subscriber Identity Module according to the present invention. The subscriber Identity Module is in the form of a card 1 in which are embedded two integrated circuits. On a surface of said card 1 is provided :
- a first set of contacts 11 providing a first electrical interface connected to a first integrated circuit, typically 8 contacts according to GSM 11.11 Standard; and
- a second set of contacts 10 providing a second electrical interface connected to a second integrated circuit, for example a MMC-type electrical interface.

The first set 11 of contacts is flush to a surface 101 of the card according typically to conventional solution used in smartcard technology.

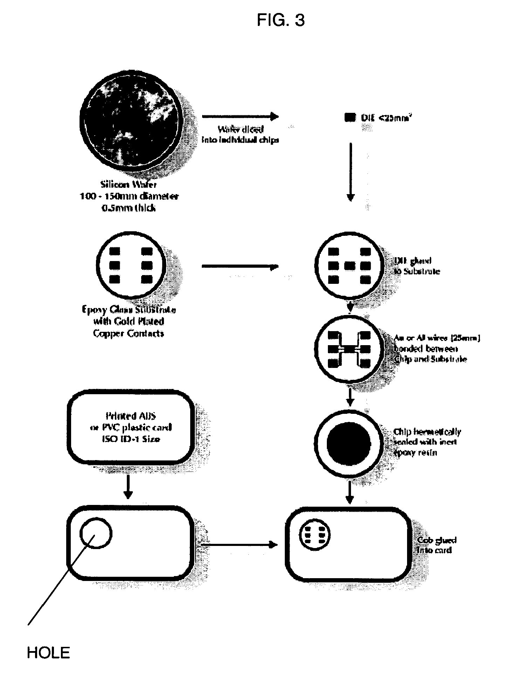

The second set 10 of contacts is slightly set back from the surface 101 of the card.
As shown in Figure 2, in the plastic of the card 1, a cavity 104 is made. In this cavity 104 a module is inserted. The module comprises the set of contacts 10 comprising of metal layer deposited on a substrate. The set 10 of metal contacts are separated from one another by insulator lines and are connected to an electronic component 102, which is a chip, by conductive wires. The set 10 of contacts may be formed by a layer of copper with a thickness of about 70 µm coated on each side with a.1 µm nickel layer and a 0.1 µm gold layer. The coating of the cooper layer with nickel and gold is used notably to prevent the corrosion of copper through contact with the ambient atmosphere.
As it appears clearly from Figure 2, the second set 10 of contacts is slightly set back from said surface 101 of the card. This slightly shifted position of the second result is obtained for example by positioning the module in the cavity at a lower level when inserted into the plastic card body. Accordingly the cavity contains the appropriate sized hole. FIG. 3 shows a hole HOLE made in the plastic card body according to a conventional process.
Another solution can be used in which a further stripping of the metal layer is made to make said layer thinner and thus have the second set of contacts 10 slightly set back from the surface of the card. Stripping can be replaced also by other mechanical of chemical solution. As a consequence, the depth of the cavity may be the same as in conventional solutions.

## Claims

1. Subscriber identity module (1) comprising a card in which is embedded at least one integrated circuit, on a surface of which said card is provided :
- a first set of contacts (11) providing a first electrical interface; and
- a second set of contacts (10) providing a second electrical interface;
**characterized in that** :
- said first set of contacts (11) is flush to the surface of the card; and
- said second set of contacts (10) is slightly set back from the surface of the card.
